# EUROPEAN PATENT SPECIFICATION

(11) **EP 1 469 985 B1**
(45) Date of publication and mention of the grant of the patent: **22.03.2006**
(21) Application number: 02806662.9
(22) Date of filing: 13.12.2002
(51) Int. Cl.: B29C 67/24, B01F 15/00, B29B 7/76, B29K 75/00

(54) **MIXING AND INJECTION UNIT FOR POLYURETHANE WITH TWO OR MORE LIQUID COMPONENTS AND METHODS OF INJECTION AND CLEANING**
MISCH- UND SPRITZEINHEIT FÜR POLYURETHAN MIT ZWEI ODER MEHR FLÜSSIGKOMPONENTEN, UND SPRITZ- UND REINIGUNGSVERFAHREN
UNITE DE MELANGE ET D'INJECTION POUR POLYURETHANNE, A DEUX OU PLUS DE DEUX COMPOSANTES LIQUIDES ET METHODES D'INJECTION ET DE NETTOYAGE

(30) Priority: 28.01.2002 IT PD20020018
(43) Date of publication of application: 27.10.2004
(73) Proprietor: Stemma S.R.L., 31030 Altivole (IT)
(72) Inventor: BORDIN, Ettore, I-31030 Altivole (IT)
(74) Representative: Agostini, Agostino
(86) International application number: PCT/IT2002/000788
(87) International publication number: WO 2003/064142

(56) References cited:
- EP-A- 0 895 815
- EP-A- 1 033 230
- EP-A- 1 186 391
- DE-A- 19 960 202
- DE-U- 8 616 880
- GB-A- 904 004
- US-A- 3 218 039
- US-A- 3 865 353
- US-A- 4 313 909
- US-A- 4 534 802
- US-A- 4 671 942
- US-A- 4 883 645
- US-A- 5 226 565
- US-A- 5 578 655
- US-A- 5 586 724
- PATENT ABSTRACTS OF JAPAN vol. 011, no. 114 (M-579), 10 April 1987 (1987-04-10) & JP 61 258712 A (MATSUSHITA ELECTRIC IND CO LTD), 17 November 1986 (1986-11-17)

## Description

The invention concerns a new mixing and injection/pouring unit for polyurethane with two or more liquid components, provided with new automatic devices for mechanically mixing and injecting polyurethane compounds and for cleaning the mixing chamber, the screw and the injection/pouring hole.

In the manufacture of products with polyurethane with two or more liquid components, polyol and isocyanate compounds are used, which, once they have been mixed with each other, react and pass to the solid state, taking the shape of the mould in which they have been introduced. The solidification of the material can be observed when a given time, called "reaction time", has elapsed after the reacting substances came into contact with each other.

The mixing and successive injection/pouring into the mould is carried out by using appropriate mixing-injection/pouring units. Polyol and isocyanate are introduced into these devices when they are in the liquid state, more precisely, they are introduced into a chamber (mixing chamber) in which a screw or some blades (mixing system) mix the components that, after having been mixed, are introduced into the mould through an "injection/pouring hole". Units of this type are generally known as "low-pressure" (see e.g. "Modern Plastics - Encyclopedia Handbook", page 161).

The polyol and isocyanate compounds introduced into the mixing chamber can be deposited on the walis of the chamber and of the mixing system and their solidification may cause the blocking of the system.

A characteristic aspect of the low-pressure mixing and injection systems is represented by the cleaning method developed to eliminate the solidified residues of the previous processes from the mixing chamber and the mixing device. At present two types of cleaning methods are substantially used:
a) cleaning of the mixing chamber and the mixing system through washing with liquid or solvents;
b) cleaning of the mixing chamber and the mixing system through scraping of the chamber walis with a truncated cone-shaped mixing screw.

Washing with solvents or cleaning liquids makes it necessary to introduce in the mixing chamber materials that, when they are deposited on the walis of the chamber and the mixing unit, may interact with the product being processed. After the washing operations, before proceeding with new processes, it is necessary to make sure that in the mixing chamber there are no residues of the washing cycle and for this purpose some "idle" injection/pouring cycles must be made, which involves waste of the material being processed.

The mechanical cleaning system with truncated cone-shaped screw does not ensure the complete cleaning of the screw that gets dirty and therefore must periodically be cleaned/replaced.

A main aim of the new unit is to ensure the complete cleaning of all its parts at the end of the mixing and injection/pouring steps.

Another aim is to facilitate the introduction of the substances (liquid components) to be mixed into the mixing chamber. A further aim is to obtain the optimal mixing of the various substances in the shortest possible time.

In this respect a prior art to consider is DE-A-199 60 202 where a "high-pressure" unit is disclosed where the injection of polyurethane is made by a piston and the mixing of the components is solely improved by arranging axial pins slidably movable in said piston and making the piston rotatable with said pins around the longitudinal axis.

Another unit is known from WO-A-82 03818 where the bottom end of the mixing cavity is not closable by a gate provided with an injection/pouring hole.

The above referred and other aims are obtained by an unit with the characteristics of claim 1 and by methods in accordance with claims 4 and 5.

The unit schematically comprises:
a) a cylindrical mixing chamber with lateral introduction of the substances to be mixed;
b) a valve system for conveying said substances into the mixing chamber of;
c) a rotating mixing device comprising a disc, on the lower part of which one or more pins, or alternatively blades, or parallelepipeds are fixed;
d) a cleaning device with female geometry in relation to the rotating mixing device, said cleaning device comprising a disc, the lower part of which is provided with a central pin and with holes in the same number, shape and arrangement as the pins, or alternatively blades, or parallelepipeds of the mixing device, the cleaning device being adapted to slide along said pins;
e) a shifting gate or partition adapted to close the mixing chamber at its bottom and provided with a central injection hole whose diameter is equal to the diameter of the central pin of the cleaning device:
   - during the injection step this shifting gate is left in such a position that the injection hole is aligned with the rotation axis of the mixing system or can be shifted in relation to the mixing axis itself, in order to obtain a higher or a lower injection pressure;
   - in a phase of the cleaning step this shifting gate is moved in such a way as to uncover the bottom of the chamber completely;
   - in another phase of the cleaning step the injection hole is aligned with the rotation axis of the mixing system, so as to allow the injection hole itself to be cleaned by the central pin of the cleaning device.

The characteristics of the new mixing and injection/pouring unit for polyurethane will be better illustrated in the following description, with reference to the drawing enclosed as one of many possible embodiments.

Figure 1 shows a vertical section of the new mixing unit while the injection/pouring step is performed.

Figure 2A and 2B show the same section in two different phases of the cleaning step.

The new mixing and injection/pouring unit comprises a mixing chamber (1) with a bottom gate or partition (4), a mixing device (2), a cleaning device (3), ducts (5) to convey the substances to be mixed, at least one duct (6) to convey oil or solvent (6), at least one duct (7) to convey compressed air.

The mixing chamber (1) has a substantially cylindrical shape and communicates with the ducts (5) that convey the substances to be mixed and with the ducts (7) that convey the compressed air.

The upper part of the mixing chamber (1) is provided with a hole (1.1) for the passage of the shafts (2.1, 3.1) of the mixing device (2) and of the Cleaning device (3) respecdvely, as better described herebelow.

The bottom gate or partition (4) slides horizontally from a position in which it forms the bottom wall of the mixing chamber (1), namely closes the lower part of the mixing chamber (1) to a position in which it leaves it completely open.

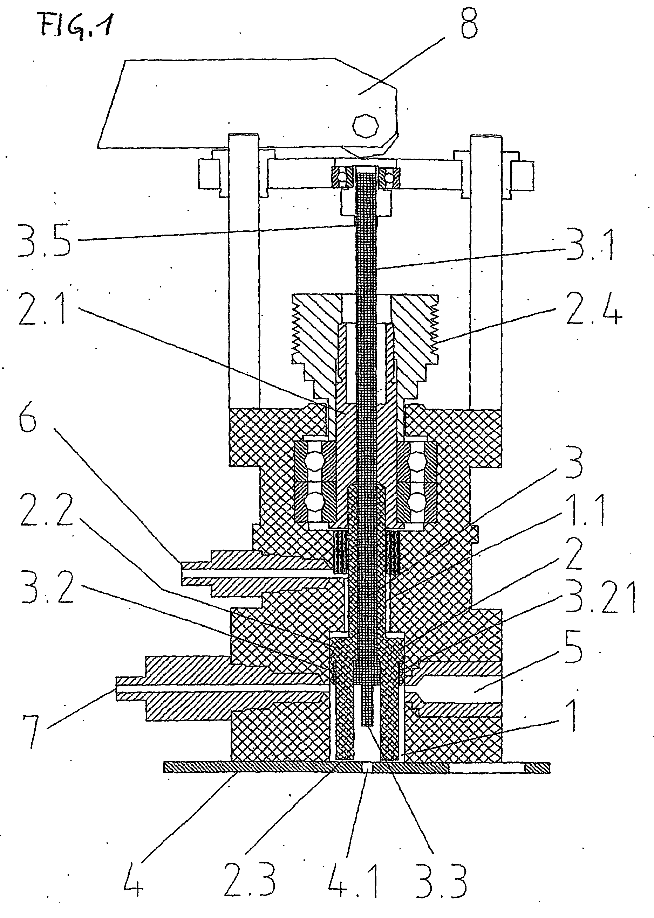

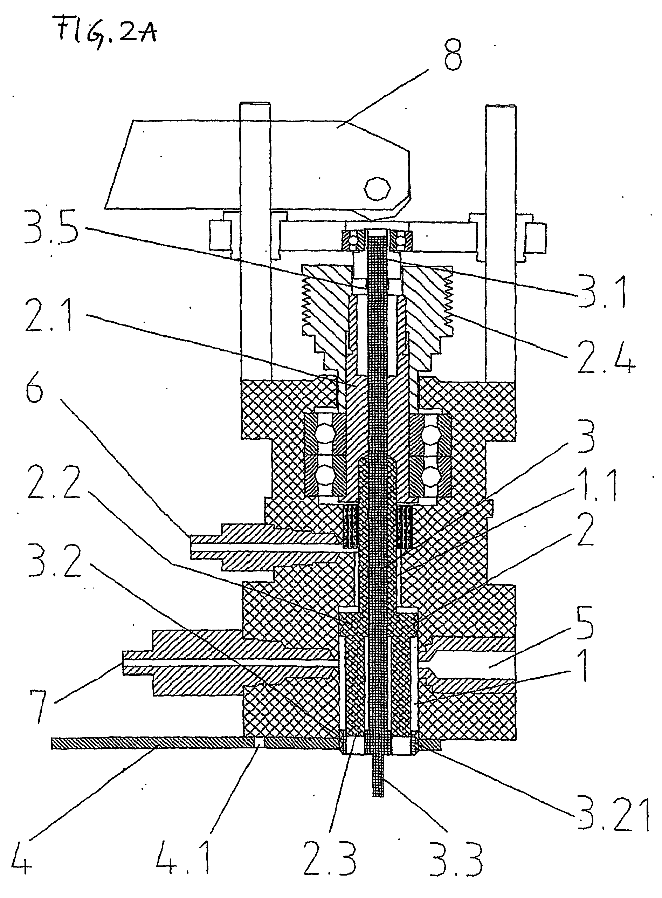

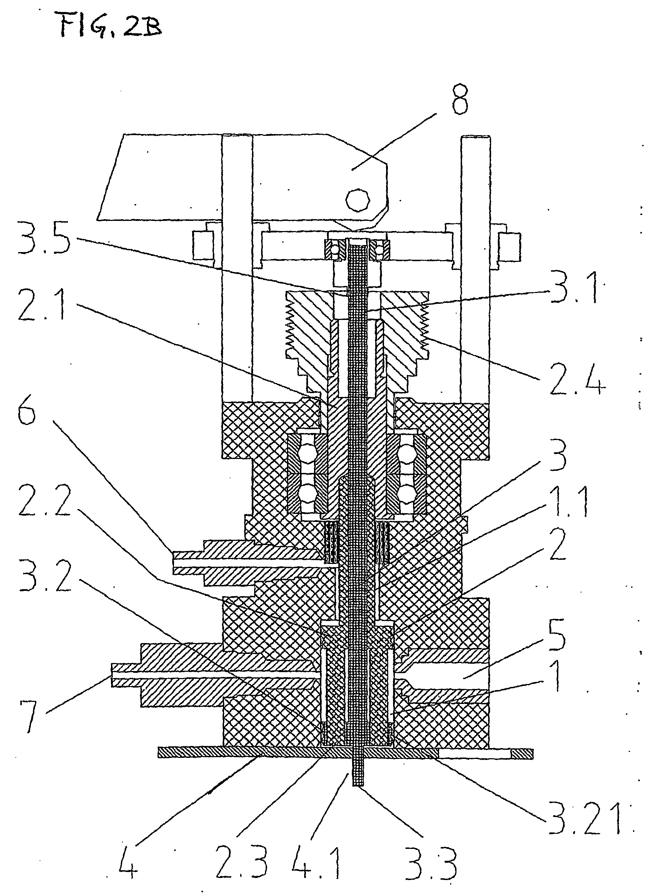

The bottom gate or partition (4) is provided with a hole (4.1) of a smaller diameter than the mixing chamber (1) that, according to the horizontal sliding movement of the gate or partition, can be positioned as follows:
- during the injection/pouring of polyurethane: the hole (4.1) is either aligned with the vertical axis of the mixing chamber (1) - see fig. 1 - or shifted horizontally in relation to the same axis, though remaining within the perimeter of the mixing chamber;
- during the cleaning phase of the mixing chamber (1): the hole (4.1) is outside the perimeter of the mixing chamber - see fig. 2A;
- during the cleaning phase of the injection/pouring hole (4.1): the hole itself is aligned with the vertical axis of the mixing chamber - see fig. 2B.

The mixing device (2) comprises a disc (2.2), mentioned as first disc from now onwards, with a diameter identical to the diameter of the mixing chamber (1), to which one or more pins are fixed, or alternatively wings or parallelepipeds (2.3). Said pins/wings/paralielepipeds (2.3) are parallel to the axis of the mixing chamber (1), protrude downwards from the lower face of the first disc (2.2) and can have any section.

A hollow vertical shaft (2.1) with circular section is fixed in central position to the upper face of the first disc (2.2) and comes out of the mixing chamber (1) through the hole (1.1).

The part of the first shaft (2.1) that is outside the mixing chamber (1) is provided with a pulley (2.4), so that it can receive the rotary motion from a motor or another system (not shown).

The cleaning device (3) comprises a disc (3.2), mentioned as second disc from now onwards, also with a diameter identical to the diameter of the mixing chamber (1), which is provided with vertical holes (3.21), the quantity, size and arrangement of which correspond to those of the vertical pins/wings/paralielepipeds (2.3) of the mixing device (2).

On the bottom of the second disc (3.2) there is, in central position, a vertical pin (3.3) which protrudes downwards from its lower face.

The upper face of the second disc (3.2) is fixed to another vertical shaft (3.1), mentioned from now onwards as central shaft since it is arranged in central position on the second disc (3.2). As it can be appreciated from the figures, the central shaft (3.1) is housed with an adequate clearance in the hollow shaft (2.1) and is aligned with the same.

The top end of the central shaft (3.1) of the cleaning device (3) adheres to a cam or connection element (8) suitable for producing a downward movement, along the vertical axis of the mixing chamber (1), of the whole cleaning device (3) while the mixing device (2) has no possibility to perform such a movement.

The cleaning device (3) is positioned under the mixing device (2), so that the pins (2.3) protruding from the lower face of the first disc (2.2) pass through the holes (3.21) of the second disc (3.2) during the injection/pouring step, as shown in figure 1, and surround the vertical pin (3.3) thereof. During said step, a mechanical element (3.5) keeps the cleaning device (3) in its upper position, that is, with the upper face of the second disc (3.2) adhering to the lower face of the first disc (2.2), which belongs to the mixing device (2).

One or more ducts (6) conveying oil or solvent cross the upper horizontal wall of the mixing chamber (1), until reaching the shafts (2.1, 3.1) of the mixing device (2) and of the cleaning device (3).

The main operating phases of the new unit as above described for mixing and injection/pouring polyurethane from two or more liquid components are described here below.

Firstly - see fig. 1 - the gate (4) is shifted to close the bottom of the mixing chamber (1) and both the mixing device (2) and the cleaning device (3) are completely lifted in such a way that the pins (2.3) protruding from the first disc (2.2) pass through the holes (3.21) of the second disc (3.2). Thus, upon receiving the motion from the pulley (2.4), the mixing device (2) rotates and sets rotating also the cleaning device (3).

The substances to be mixed are conveyed into the mixing chamber (1) through the appropriate ducts (5), in the suitable quantities and proportions.

The mixing device (2) rotates and its pins (2.3) mixes the various substances, producing a positive energy variation that allows the polyurethane to be injected or poured into a mould (not shown) through the hole (4.1) in the gate (4). It was found that the mixing of the substances is particularly effective thanks to the whirling generated by the vertical pin (3.3) of the second disc (3.2) and the mixing time is shortened.

During this step the injection/pouring hole (4.1) is aligned with the rotation axis - see fig. 1 - or, though remaining within the perimeter of the mixing chamber (1), is shifted horizontally in relation to the axis. The position of the injection/pouring hole (4.1) in relation to the rotation axis determines the energy variation in the polyurethane.

Once the substances have been mixed and the polyurethane has been injected or poured, the cleaning step begins, which takes place in two phases.

In the first phase thereof the bottom gate (4) is shifted laterally, in such a way as to leave the bottom of the mixing chamber (1) fully open.

The cleaning device (3) is lowered by the cam (8) which urges on the top end of the central shaft (3.1) and at the same time compressed air is introduced into the mixing chamber (1) through the appropriate ducts (5). Any substance residues present on the walls of the mixing chamber (1) or on the surface of the pins (2.3) of the mixing device (2) are removed by the peripheral walls of the second disc (3.2) or by the holes (3.21) of the disc itself, respectively - see fig.2A. This first phase of the cleaning step of the injection/pouring unit of the present invention finishes when the second disc (3.2) attains the bottom of the mixing chamber (1).

The cleaning device (3) is then lifted and the bottom gate (4) is shifted to its normal use position, namely with the injection/pouring hole (4.1) aligned with the mixing chamber (1).

In the subsequent second phase the cleaning device (3) is lowered for a second time to allows the central pin (3.3), protruding from the lower face of the second disc (3.2), to be inserted into the hole (4.1) of the bottom gate (4) removing the residues from the hole (4.1) itself - see fig.2B.

Finally, the cleaning device (3) is lifted and the substance mixing cycle starts again.

At the end of the work day or of the production cycle the cleaning operations described above are repeated, introducing first solvents, to remove any substance layer, and then lubricants through the appropriate ducts (6).

The new mixing and injection/pouring unit described above ensures the cleaning of the mixing chamber (1) and the mixing system.

The above described new mixing and injection/pouring unit makes it possible to vary the injection pressure.

The new mixing and injection/pouring unit described above allows the mixing and cleaning devices (2, 3) and the bottom gate/partition (4) to be replaced with others having different shape, according to the characteristics of the substances to be mixed and of the final product to be obtained.

Although the preceding description refers to a preferred embodiment it is intended that the invention can be implemented in different manners and variants within the scope of the appended claims. In particular, during the cleaning step, said first and second phase can occurr in the opposite sequence and use of compressed air can not be needed.

## Claims

1. An unit where two or more liquid components are mixed to obtain polyurethane which is injected/poured in a first step, the unit being subsequently cleaned in a second step and comprising :
[a] a cylindrical mixing chamber (1),
[b] ducts (5) for conveying the components to be mixed into said chamber (1),
[c] a gate (4) slidable transversally with respect to the longitudinal axis of said chamber (1) and adapted to form a first end wall thereof,
[d] a hole (4.1) provided in said gate (4) and of a restricted cross-section with respect to the mixing chamber (1),
[e] a first disc (2.2) having a first and a second face with the same diameter as the mixing chamber (1) and coaxial thereto,
[f] one or more pins (2.3) protruding from the second face of said first disc (2.2) parallel to the longitudinal axis of said chamber (1),
[g] a first hollow shaft (2.1) fixed to the first face of said first disc (2.2) and coming out through a hole (1.1) in the end of the chamber (1) which is opposite to said first end,
[h] a pulley (2.4) fixed to the part of said first shaft (2.1) coming out of the mixing chamber (1) and adapted to transmit to said first disc (2.2) a rotary motion from a driving means such as a motor, **characterized in that** said first shaft (2.1) is hollow and **in that** the unit further comprises
[i] a second disc (3.2) having a first and a second face of the same diameter as the mixing chamber (1) and coaxial thereto, provided with one or more axial holes (3.21) which are identical, with female geometry to the pins (2.3) of said first disc (2.2), as to quantity, size and arrangement, whereby
said second disc (3.2) is furthermore provided with a pin (3.3) protruding in central position from the second face thereof coaxially to the chamber (1) and having a cross-section not wider than said injection/pouring hole (4.1).

2. A mixing and injection/pouring unit according to claim 1, **characterized in that** a second shaft (3.1) passing coaxially through the said first shaft (2.1) is fixed, in central position, to the first face of said second disc (3.2) and is adapted to transmit an axial motion received by a cam (8) or a connection element in order to move said second disc (3.2) away from said first disc (2.2), whereby during the cleaning step said central pin (3.3) is inserted into said injection/pouring hole (4.1).

3. Mixing and injection/pouring unit according to claim 2, **characterized in that** a biasing mechanical element (3.5) is arranged around said second shaft (3.1), whereby during the mixing and injection/pouring step the first face of said second disc (3.2) is kept in contact with the second face of said first disc (2.2).

4. Method for mixing and injecting or pouring polyurethane obtained from two or more liquid components through an unit according to any of the preceding claims, whereby said one or more protruding pins (2.3) of the first disc (2.2) are engaged into the corresponding holes (3.21) of said second disc (3.2), whereby said first disc (2.2) drives into rotation said second disc (3.2) while the injection/pouring hole (4.1) is said gate (4) is aligned with the axis of the mixing chamber (1) or, in any case, within the perimeter thereof.

5. Method for cleaning a mixing and injection/pouring unit for polyurethane according to any of the claims 1 to 3, said method comprising the phases of :
[a] sliding said gate (4) so as to leave the first end of the mixing chamber (1) open;
[b] moving said second disc (3.2) away from said first disc (2.2) toward the open first end of said chamber (1), whereby any polyurethane residues present on the walls of the chamber (1) and/or on the surface of the pins (2.3) are removed;
[c] retracting said second disc (3.2) toward said first disc (2.2) while sliding said gate (4) to close said first end of the chamber (1) and bring the injection/pouring hole (4.1) in alignment with the longitudinal axis thereof;
[d] moving said second disc (3.2) away from said first disc (2.2) toward the closed end of said chamber (1), whereby any polyurethane residues present in the injection/pouring hole (4.1) is removed by said central vertical pin (3.3) protruding from the second disc (3.2) while passing therethrough;
[e] retracting said second disc (3.2) toward said first disc (2.2) to bring the first face of said second disc (3.2) in contact with the second face of said first disc (2.2).

6. Method according to claim 5 for cleaning a mixing and injection/pouring unit for polyurethane according to any of the claims 1 to 3, in which compressed air is introduced into the mixing chamber (1) in the phase [b] where any polyurethane residues present on the walls of the chamber (1) and/or on the surface of the pins (2.3) of the second disc (2.2) are removed.

## Patentansprüche

1. Vorrichtung, bei der zwei oder mehr flüssige Komponenten vermischt werden zum Erhalt von Polyurethan, welches in einem ersten Schritt eingespritzt/ausgegossen wird, wobei die vorrichtung nachfolgend in einem zweiten Schritt gereinigt wird und aufweist:
[a] eine zylindrische Mischkammer (1),
[b] Röhren (5) zum Befördern der zu mischenden Komponenten in die Kammer (1),
[c] einen Schieber (4), der bezüglich der Längsachse der Kammer (1) transversal verschiebbar ist und für die Bildung einer ersten Seitenwand derselben geeignet ist,
[d] ein in dem schieber (4) vorgesehenes Loch (4.1) mit einem beschränkten Querschnitt bezüglich der Mischkammer (1),
[e] eine erste Scheibe (2.2) mit einer ersten und einer zweiten Fläche mit dem gleichen Durchmesser wie die Mischkammer (1) und koaxial zu derselben,
(f) einen oder mehrere Stiften (2.3), die von der zweiten Fläche der ersten Scheibe (2.2) parallel zu der Längsachse der Kammer (1) hervorragen,
[g] eine ersten Hohlwelle (2.1), die an der ersten Fläche der ersten Scheibe (2,2) befestigt ist und durch ein Loch (1.1) in dem Ende der Kammer (1), das dem ersten Ende gegenüberliegt, herauskommt,
[h] ein Antriebsrad (2.4), das an dem Teil der ersten Welle (2.1) angebracht ist, der aus der Mischkammer (1) herauskommt, und das geeignet ist, von einem Antriebsmittel, wie zum Beispiel einem Motor, eine Drehbewegung zu der ersten Scheibe (2.2) zu übertragen, **dadurch gekennzeichnet, dass** die erste Welle (2.1) hohl ist und die Vorrichtung weiterhin aufweist:
[i] eine zweite Scheibe (3,2) mit einer ersten und einer zweiten Fläche des gleichen Durchmessers wie die Mischkammer (1) und koaxial zu derselben, ausgerüstet mit einer oder mehrerer Axialbohrungen (3.21), die identisch sind mit Buchsengeometrie zu den Stiften (2.3) der ersten Scheibe (2,2) bezogen auf Länge, Größe und Anordnung, bei der
die zweite Scheibe (3.2) weiterhin mit einem Stift (3.3) versehen ist, der in einer zentralen Position von der zweiten Fläche derselben koaxial zu der Kammer (1) hervorragt und einen Querschnitt aufweist, der nicht breiter ist als das Einspritz-/Ausgieß-Loch (4.1).

2. Misch- und Einspritz-/Auegieß-vorrichtung nach Anspruch 1, **dadurch gekennzeichnet, dass** eine zweite Welle (3.1), die koaxial die erste Welle (2.1) durchdringt, in Mittenstellung an der ersten Fläche der zweiten Scheibe (3.2) befestigt ist und geeignet ist, eine durch einen Exzenter (8) oder ein Verbindungselement empfangene Axialbewegung zu übertragen zum Wegbewegen der zweiten Scheibe (3.2) von der ersten Scheibe (2.2), wobei während des Reinigungsschrittes der mittige Stift (3.3) in das Einspritz-/Ausgießloch (4.1) eingeführt wird.

3. Misch- und Einspritz-/Ausgieß-vorrichtung nach Anspruch 2, **dadurch gekennzeichnet, dass** ein ausrichtendes mechanisches Element (3.5) um die zweite Welle (3.1) herum angeordnet ist, wodurch während des Misch- und Einspritz-/Ausgieß-Schrittes die erste Fläche der zweiten Scheibe (3.2) in Kontakt zu der zweiten Fläche der ersten Scheibe (2.2) gehalten wird.

4. Verfahren zum Mischen und Einspritzen oder Ausgießen von Polyurethan, das aus zwei oder mehr flüssigen Komponenten erhalten wurde, durch eine Vorrichtung nach einem der vorangehenden Ansprüche bei dem der eine oder die mehreren hervorstehenden Stifte (2.3) der ersten Scheibe (2.2) in die entsprechenden Löcher (3.21) der zweiten Scheibe (3,2) eingreifen, wobei die erste Scheibe (2.2) die zweite Scheibe (3.2) in eine Drehung versetzt, während das Einspritz-/Ausgieß-Loch (4.1) in dem Schieber (4) zu der Achse der dem Schieber (4) zu der Achse der Mischkammer (1) ausgerichtet ist oder auf jeden Fall innerhalb des Umfangs derselben ist.

5. Verfahren zum Reinigen einer Misch- und Einspritz-/Ausgieß-Vorrichtung für Polyurethan nach einem der Ansprüche 1 bis 3, wobei das Verfahren die Phasen aufweist:
[a] Verschieben des Schiebers (4) dergestalt, dass das erste Ende der Mischkammer (1) offen gelassen wird;
[b] Bewegen der zweiten Scheibe (3.2) von der ersten Scheibe (2.2) weg zu dem offenen ersten Ende der Kammer (1) hin, wobei irgendwelche auf den Wänden der Kammer (1) und/oder auf der Oberfläche der Stifte (2.3) vorhandene Polyurethanreste entfernt werden;
[c] Zurückziehen der zweiten Scheibe (3.2) zu der ersten Scheibe (2.2) hin, während des Verschiebens des Schiebers (4) zum Verschließen des ersten Endes der Kammer (1) und Dringen des Einspritz-/Ausgieß-Lochs (4.1) in Ausrichtung zu der Längsachse derselben;
[d] Bewegen der zweiten Scheibe (3.2) von der ersten Scheibe (2.2) weg zu dem geschlossenen Ende der Kammer (1) hin, wobei irgendwelche in dem Einspritz-/Ausgieß-Loch (4.1) vorhandene Polyurethanreste durch den aus der zweiten Scheibe (3.2) herausragenden mittigen vertikalen Stift (3.3) entfernt werden, während er durch dieses hindurch geht;
[e] Zurückziehen der zweiten Scheibe (3.2) zu der ersten Scheibe (2.2) hin zum Bringen der ersten Fläche der zweiten Scheibe (3.2) in Kontakt zu der zweiten Fläche der ersten Scheibe (2.2).

6. Verfahren nach Anspruch 5 zum Reinigen einer Misch- und Einspritz-/Ausgieß-Vorrichtung für Polyurethan nach einem der Ansprüche 1 bis 3, bei dem in der Phase [b], in der irgendwelche auf den Wänden der Kammer (1) und/oder auf der Oberfläche der Stifte (2.3) der zweiten Scheibe (2.2) vorhandene Polyurethanreste entfernt werden, Druckluft in die Mischkammer (1) eingeleitet wird.

## Revendications

1. Unité dans laquelle deux composants liquides ou plus sont mélangés pour obtenir du polyuréthane qui est injecté / coulé lors d'une première étape, l'unité étant ensuite nettoyée lors d'une seconde étape et comprenant :
(a) une chambre de mélange cylindrique (1),
(b) des conduits (5) pour transporter les composants à mélanger dans ladite chambre (1),
(c) une porte (4) pouvant coulisser de manière transversale par rapport à l'axe longitudinal de ladite chambre (1) et adaptée pour former sa première paroi d'extrémité,
(d) un trou (4.1) prévu dans ladite porte (4) et de section transversale limitée par rapport à la chambre de mélange (1),
(e) un premier disque (2.2) ayant une première et une seconde face avec le même diamètre que la chambre de mélange (1) et coaxial par rapport à celle-ci,
(f) une ou plusieurs broches (2.3) faisant saillie à partir de la seconde face dudit premier disque (2.2) parallèle à l'axe longitudinal de ladite chambre (1),
(g) un premier arbre creux (2.1) fixé sur la première face dudit premier disque (2.2) et sortant par un trou (1.1) dans l'extrémité de la chambre (1) qui est opposée à ladite première extrémité,
(h) une poulie (2.4) fixée sur la partie dudit premier arbre (2.1) sortant de la chambre de mélange (1) et adaptée pour transmettre audit premier disque (2.2) un mouvement rotatif provenant de moyens d'entraînement tels qu'un moteur, **caractérisée en ce que** ledit premier arbre (2.1) est creux et **en ce que** l'unité comprend en outre :
(i) un second disque (3.2) ayant une première et une seconde face du même diamètre que la chambre de mélange (1) et coaxial par rapport à celle-ci, prévu avec un ou plusieurs trous axiaux (3.21) qui sont identiques, avec la géométrie femelle sur les broches (2.3) dudit premier disque (2.2), du point de vue de la quantité, de la taille et de l'agencement, ledit second disque (3.2) étant en outre prévu avec une broche (3.3) faisant saillie dans une position centrale à partir de sa seconde face de manière coaxiale à la chambre (1) et ayant une section transversale qui n'est pas plus large que ledit trou d'injection / coulée (4.1).

2. Unité de mélange et d'injection / coulée selon la revendication 1, **caractérisée en ce qu'**un second arbre (3.1) passant de manière coaxiale à travers ledit premier arbre (2.1) est fixé, en position centrale, sur ladite première face dudit second disque (3.2) et est adapté pour transmettre un mouvement axial reçu par une came (8) ou un élément de raccordement afin de déplacer ledit second disque (3.2) à distance dudit premier disque (2.2), ladite broche centrale (3.3) étant insérée dans ledit trou d'injection / coulée (4.1) pendant l'étape de nettoyage,.

3. Unité de mélange et d'injection / coulée selon la revendication 2, **caractérisée en ce qu'**un élément mécanique de sollicitation (3.5) est agencé autour dudit second arbre (3.1), la première face dudit second disque (3.2) étant maintenue en contact avec la seconde face dudit premier disque (2.2) pendant l'étape de mélange et d'injection / coulée,.

4. Procédé permettant de mélanger et d'injecter ou de couler du polyuréthane obtenu à partir de deux composants liquides ou plus par le biais d'une unité selon l'une quelconque des revendications précédentes, lesdites une ou plusieurs broches en saillie (2.3) du premier disque (2.2) étant mises en prise dans les trous (3.21) correspondants dudit second disque (3.2), et ledit premier disque (2.2) entraînant en rotation ledit second disque (3.2) alors que le trou d'injection / coulée (4.1) qui est ladite porte (4), est aligné avec l'axe de la chambre de mélange (1) ou, dans tous les cas, dans les limites de son périmètre.

5. Procédé permettant de nettoyer une unité de mélange et d'injection / coulée pour polyuréthane selon l'une quelconque des revendications 1 à 3, ledit procédé comprenant les phases consistant à :
(a) faire coulisser ladite porte (4) afin de laisser la première extrémité de la chambre de mélange (1) ouverte ;
(b) déplacer ledit second disque (3.2) à distance dudit premier disque (2.2) vers la première extrémité ouverte de ladite chambre (1), moyennant quoi les résidus de polyuréthane présents sur les parois de la chambre (1) et/ou sur la surface des broches (2.3) sont retirés ;
(c) rétracter ledit second disque (3.2) vers ledit premier disque (2.2) tout en faisant coulisser ladite porte (4) pour fermer ladite première extrémité de la chambre (1) et amener le trou d'injection / coulée (4.1) en alignement avec son axe longitudinal ;
(d) déplacer ledit second disque (3.2) à distance dudit premier disque (2.2) vers l'extrémité fermée de ladite chambre (1), les résidus de polyuréthane présents dans le trou d'injection / coulée étant retirés par ladite broche verticale centrale (3.3) faisant saillie à partir du second disque (3.2) tout en passant à travers ;
(e) rétracter ledit second disque (3.2) vers ledit premier disque (2.2) pour amener la première face dudit second disque (3.2) en contact avec la seconde face dudit premier disque (2.2).

6. Procédé selon la revendication 5 pour nettoyer une unité de mélange et d'injection / coulée pour polyuréthane selon l'une quelconque des revendications 1 à 3, dans lequel on introduit de l'air comprimé dans la chambre de mélange (1) à la phase (b) où les résidus de polyuréthane présents sur les parois de la chambre (1) et/ou sur la surface des broches (2.3) du second disque (2.2) sont retirés.
